# DEMANDE DE BREVET EUROPEEN

(11) **EP 4 119 528 A1**
(43) Date de publication de la demande: **18.01.2023**
(21) Numéro de dépôt: 21185940.0
(22) Date de dépôt: 15.07.2021
(51) Int. Cl.: C04B 41/00, C04B 41/52, C04B 41/83, C04B 41/84, C04B 41/89, G02B 1/14, C04B 111/00, C04B 111/27, C04B 111/80

(54) **COMPOSANT OPTIQUE RESISTANT A LA PLUVIO-EROSION**

(71) Demandeur: Safran Electronics & Defense, 75015 Paris (FR)
(72) Inventeur: DUPEYRAT, Cyril, 77550 MOISSY-CRAMAYEL (FR); JEGOUZO, Michel, 77550 MOISSY-CRAMAYEL (FR); JUNIQUE, Pascal, 77550 MOISSY-CRAMAYEL (FR); CHATEAU, Denis, 69342 LYON (FR); PAROLA, Stéphane, 69342 LYON (FR)
(74) Mandataire: Lavialle, Bruno François Stéphane

(57) **Abrégé**

Composant optique (5) comprenant un substrat (6) en un matériau ayant un taux prédéterminé de transmission de rayonnements ayant une longueur d'onde comprise dans une bande prédéterminée de longueurs d'onde, et un revêtement (7) s'étendant sur une surface (6') du substrat (6). Le revêtement (7) comprend une matrice (8) à base d'au moins un polymère dans laquelle sont noyées des nanoparticules (9), le composant optique (5) ayant au total un taux de transmission suffisant pour l'application pour des longueurs d'ondes comprises dans la bande prédéterminée de longueurs d'onde.

## Description

La présente invention concerne le domaine de l'optique. Il est connu des dispositifs de détection optique agencés pour capturer des rayonnements d'intérêt, comme par exemple des rayonnements dans les domaines visible et/ou infrarouge.

Un tel dispositif de détection peut par exemple être embarqué dans un véhicule pour permettre la visualisation de tout ou partie de l'environnement externe au véhicule. Le dispositif de détection comprend des éléments sensibles aux rayonnements d'intérêt disposés derrière une voie optique ayant un composant optique externe, comme une fenêtre, un hublot ou un dôme, comportant un substrat en sulfure de zinc qui est destiné à permettre la transmission des rayonnements d'intérêt et qui possède une surface, dite externe, à l'extérieur du véhicule.

Cette surface est donc susceptible d'être soumise à des agressions. Tel est le cas pour les dispositifs de détection embarqués sur des aéronefs circulant à grande vitesse, par exemple plusieurs centaines de kilomètres par heure, voire Mach 1 ou plus. La surface externe est alors fréquemment et violemment percutée par des gouttes d'eau durant des épisodes de pluie ou lorsque les aéronefs traversent des nuages, provoquant des chocs dont l'énergie est d'autant plus importante que la vitesse de déplacement du véhicule est élevée et d'autant plus préjudiciables que la durée de vol dans ces conditions est importante. Il en résulte une détérioration du composant externe dont sa surface externe, nommée pluvio-érosion, qui dégrade la transmission des rayonnements et affecte négativement l'intégrité structurelle du substrat. Le même phénomène se produit avec des véhicules traversant des nuages de particules en suspension, comme du sable.

Il existe des substrats revêtus d'un revêtement protecteur dur comprenant par exemple une couche de carbone diamant (ou DLC de l'anglais « diamond like carbon »), une couche de phosphure de bore, une couche de carbure ou de phosphure de gallium, ou une couche de saphir. Ces revêtements assurent une protection efficace contre la pluvio-érosion mais tendent à transmettre au substrat l'énergie des chocs des gouttes d'eau contre le revêtement, ce qui affecte la résistance du substrat.

Il a été envisagé d'utiliser des revêtements plus souples pour absorber une partie de l'énergie des chocs mais les matériaux utilisables pour de tels revêtements ont généralement un taux de transmission des rayonnements d'intérêt qui est trop faible pour les applications envisagées sauf à prévoir une épaisseur du revêtement si faible que le revêtement n'est plus en mesure de protéger efficacement le substrat.

### OBJET DE L'INVENTION

L'invention a notamment pour but de fournir une protection qui soit efficace contre la pluvio-érosion et suffisamment transparente aux rayonnements d'intérêt.

### RESUME DE L'INVENTION

A cet effet, on prévoit, selon l'invention un composant optique comprenant un substrat en un matériau ayant un taux prédéterminé de transmission de rayonnements ayant une longueur d'onde comprise dans une bande prédéterminée de longueurs d'onde, et un revêtement s'étendant sur une surface du substrat. Le revêtement comprend une matrice à base d'au moins un polymère dans laquelle sont noyées des nanoparticules en au moins un matériau ayant un taux de transmission au moins voisin du taux prédéterminé de transmission des rayonnements de longueurs d'onde comprises dans la bande prédéterminée de longueurs d'onde. Ainsi, le revêtement peut avoir une dureté inférieure aux revêtements durs antérieurs et une épaisseur supérieure à celle des revêtements antérieurs tout en ayant un taux de transmission suffisant du fait de la présence des nanoparticules. De la sorte, le composant optique peut supporter des chocs de plus forte énergie que les composants optiques classiques ou, à énergie égale, supporter des chocs plus longtemps que les composants optiques classiques. Le véhicule équipé d'un tel composant optique est donc susceptible de circuler plus vite ou plus longtemps dans des environnements comprenant des particules ou des gouttes d'eau en suspension.

De préférence, le polymère de la matrice, le matériau et la concentration des nanoparticules sont choisis pour que le revêtement provoque une perte de transmission inférieure à 10% maximum dans la bande prédéterminée de longueurs d'onde.

L'invention a également pour objet un dispositif de détection comprenant un élément sensible disposé en arrière d'un tel composant optique.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :

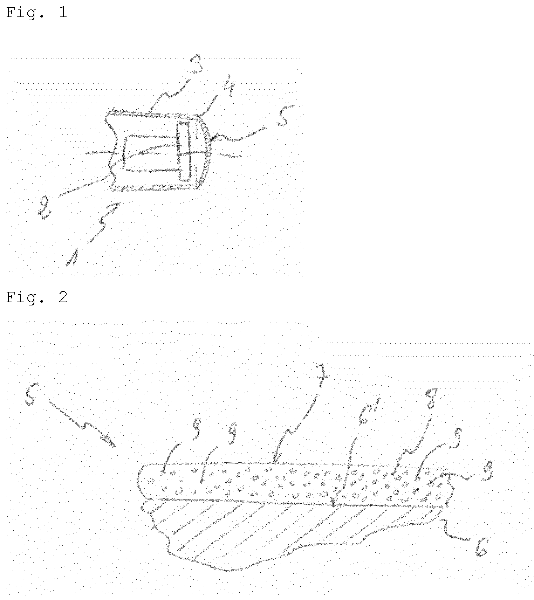

[Fig. 1] la figure 1 est une vue schématique partielle, en coupe selon une direction moyenne de propagation du rayonnement, d'un dispositif de détection optique selon l'invention ;
[Fig. 2] la figure 2 est une vue schématique partielle et en coupe d'un composant optique du dispositif de détection selon l'invention.

### DESCRIPTION DETAILLEE DE L'INVENTION

En référence aux figures, l'invention concerne un dispositif de détection, généralement désigné en 1, comprenant un ou plusieurs éléments sensibles 2 comme un capteur InSb, un capteur HgCdTe, des microbolomètres, un capteur silicium. L'élément sensible 2 est disposé dans un boîtier 3 présentant une ouverture 4 fermée par un composant optique, généralement désigné en 5, disposé selon la direction moyenne de propagation des rayonnements dans le dispositif de détection.

L'élément sensible 2, connu en lui-même, est sensible à des rayonnements de longueurs d'onde comprises dans une ou plusieurs bandes prédéterminées de longueurs d'onde.

Le composant optique 5 joue le rôle d'une fenêtre et a une fonction de protection de la voie optique et de l'élément sensible contre les agressions externes. Le composant optique 5 peut avoir une forme plane, une forme en calotte sphérique ou toute autre forme par exemple profilée pour favoriser sa pénétration dans l'air.

Le composant optique 5 comprend un substrat 6 réalisé dans un matériau ayant un taux de transmission de ces rayonnements qui est le plus grand possible compte-tenu des autres contraintes, notamment de coût, qui peuvent conditionner le choix de ce matériau. En considérant ici à titre d'exemple que les longueurs d'onde d'intérêt sont celles appartenant à la bande 7 à 14 µm (dite aussi bande LWIR de l'anglais « long wave infra red »), le matériau choisi pour le substrat 6 est par exemple le sulfure de zinc ou ZnS.

Le substrat 6 a une surface principale orientée vers l'élément sensible 2 et, à l'opposé, une surface principale 6' revêtue d'un revêtement 7.

Le revêtement 7 comprend une matrice 8 d'au moins un polymère dans laquelle sont noyées des nanoparticules 9 en un matériau ayant un taux de transmission favorable pour les rayonnements de longueur d'onde comprise dans la bande prédéterminée de longueurs d'onde.

Les nanoparticules 9 sont ici en un fluorure de lanthanide et plus particulièrement en fluorure d'ytterbium (YbF₃). Les nanoparticules 9 ont ici une plus grande dimension comprise entre 20 et 30 nm et une forme générale sensiblement ovoïde. Bien entendu d'autres formes et dimensions sont possibles. Néanmoins, pour éviter que les nanoparticules 9 diffusent le rayonnement, il est nécessaire que la plus grande dimension des nanoparticules 9 soit inférieure à la plus petite longueur d'onde d'intérêt de préférence au moins dans un rapport 10.

Le polymère constituant la matrice 8 et le matériau des nanoparticules 9 sont choisis pour provoquer une perte de transmission inférieure à 10% dans la bande prédéterminée de longueurs d'onde.

Deux modes de réalisation particuliers vont maintenant être décrits, à savoir un premier mode de réalisation dans lequel la matrice 8 est réalisée à partir d'un matériau sol-gel et un deuxième mode de réalisation dans lequel la matrice 8 est un polyéthylène ayant une masse volumique supérieure à 0,94 g.cm⁻³ comme un polyéthylène à haute densité (PEhD) ou un polyéthylène à ultra haut poids moléculaire (UHMWPE).

Selon le premier mode de réalisation, la matrice 8 est obtenue à partir d'un matériau sol-gel ici hybride. Un tel matériau est un matériau mixte organique-inorganique, généralement basé sur des réseaux d'oxydes métalliques, avec des propriétés physiques et mécaniques qui se situent entre celles d'un polymère organique pur et celles d'une céramique (inorganique). Un tel matériau est donc plus souple qu'une céramique tout en étant thermiquement et mécaniquement plus résistant qu'un polymère traditionnel. Le matériau sol-gel étant préparé à partir d'un liquide (ou solution), il peut facilement être dopé au stade liquide avec divers matériaux solides pour donner le matériau sol-gel final. Le principal inconvénient du matériau sol-gel est la faible transparence des réseaux d'oxydes métalliques dans la bande LWIR (due à la forte absorption des liaisons métal-oxygène autour de 10µm). L'incorporation des nanoparticules 9 au matériau sol-gel permet de contrebalancer cette faible transparence et d'avoir une épaisseur du substrat 6 qui soit suffisante pour absorber les chocs.

Le matériau sol-gel ici employé est l'un des suivants :
- méthyl-triéthoxysilane (MTEOS) ;
- 3-glycidyloxypropyltrimethoxysilane (GLYMO) ;
- 3-glycidyloxypropylmethyldimethoxysilane (GLYDO).

Le matériau MTEOS est très simple structurellement et, après une opération d'hydrolyse-condensation, donne une matrice dont la composition est proche de (CH₃SiO_{1,5})ₙ avec une faible teneur organique très résistante chimiquement. Le matériau GLYMO donne une matrice plus organique que le matériau MTEOS mais offre une meilleure adhérence et une très faible porosité.

Le matériau GLYDO est très similaire au matériau GLYMO mais donne une matrice avec moins de liaisons Si-O, donc moins absorbante des rayonnements de la bande LWIR et légèrement plus souple.

A titre d'exemple, la dureté du revêtement 7, mesurée au scléromètre, est de 1N dans le cas d'une matrice issue du matériau MTEOS et de 2N dans le cas d'une matrice issue du matériau GLYMO.

Les propriétés physiques des matrices obtenues à partir de matériau sol-gel permettent au revêtement 7 d'avoir les caractéristiques recherchées de résistance aux chocs et à la pluvio-érosion même avec des épaisseurs relativement faibles. A titre d'exemple, l'épaisseur du revêtement sans nanoparticules est de 560nm environ pour la matrice issue du matériau MTEOS et de 380nm environ pour la matrice issue du matériau GLYMO. Avec de telles épaisseurs, la différence de transmission globale des rayonnements de la bande 7-14 µm, entre le substrat 6 non revêtu et le substrat 6 pourvu du revêtement 7, est de -9,1% environ pour le revêtement à base de matériau MTEOS et -3,7% environ pour le revêtement à base de matériau GLYMO. Cette différence s'explique principalement par la plus grande proportion de groupes organiques dans le polymère à base de matériau GLYMO, ce qui réduit considérablement l'absorption autour de la longueur d'onde 10pm, et l'absence de groupes CH3, ce qui réduit considérablement l'absorption autour de la longueur d'onde 8pm.

De préférence, l'épaisseur et l'indice de réflexion du revêtement 7 sont choisis de manière à conférer au revêtement 7 une fonction antireflet. L'effet antireflet apparaît lorsque l'épaisseur du revêtement lui permet de jouer le rôle d'une couche antireflet quart d'onde : l'indice de réflexion du revêtement 7 doit avoir une valeur proche de la racine carrée de la valeur de l'indice de réflexion du substrat 6 (dans notre exemple, le revêtement 7 a un indice de réflexion de 1,4 à 1,45 alors que le substrat 6 en ZnS a un indice de réflexion de 2,2). Cet effet antireflet est important, et dans le cas présent, peut théoriquement procurer une amélioration de l'ordre de 13% de la transmittance.

De préférence, si la transmission est privilégiée, on cherchera à avoir un revêtement d'épaisseur comprise entre 1 et 1,5 µm.

De préférence encore, la concentration de nanoparticules 9 est supérieure à 50%, voire à 70%, et peut atteindre 90%. Augmenter la concentration de nanoparticules 9 jusqu'à 90% et substituer le matériau GLYDO au matériau GLYMO améliore significativement la transmittance. En effet, ceci permet de limiter l'absorption, par le revêtement 7, des rayonnements de longueurs d'onde voisines de 9 µm, avec une amplitude d'absorption de 10% à 15% au maximum, et voisines de 10 µm avec une amplitude d'absorption de 10% au maximum.

Pour incorporer les nanoparticules 9 à la matrice 8, il apparait plus aisé d'utiliser des nanoparticules dispersées dans un liquide plutôt que des nanoparticules en poudre qui risque de s'agréger dans la matrice. Le liquide retenu pour les matériaux sol-gel est l'eau.

Pour incorporer les nanoparticules au matériau GLYMO, la suspension de nanoparticules dans l'eau est diluée avec de l'éthanol avant l'ajout du matériau GLYMO, ce qui permet ensuite de déposer le revêtement par centrifugation. Pour incorporer les nanoparticules au matériau GLYDO, la suspension de nanoparticules dans l'eau est diluée avec du méthanol. Dans tous les cas, les dispersions ont été soumises à des ultrasons, puis une filtration.

Ces revêtements à base de matériau sol-gel sont faciles à déposer par centrifugation, trempage ou pulvérisation, et sont assez bon marché en terme de matériaux.

Selon le deuxième mode de réalisation, le polymère de la matrice 8 est le polyéthylène.

Les polyéthylènes employés sont plus particulièrement les polyéthylènes haute densité (HDPE, de densité supérieure à 0,94) et les polyéthylènes à ultra haut poids moléculaire (UHMWPE, de poids moléculaire supérieur à 300.000 g.mol⁻¹). Le revêtement 7 à base de polyéthylène UHMWPE est ici déposé par extrusion.

Le revêtement 7 à base de polyéthylène HDPE est ici déposé sous forme liquide, dépôt suivi d'une évaporation et d'une fusion.

Pour améliorer l'adhérence du revêtement 7 sur la surface du substrat 6, il est envisageable de réaliser un traitement préalable de la surface 6'. Parmi les traitements réalisables, on trouve :
- un traitement physico-chimique de surface par plasma (le nettoyage au plasma est par exemple effectué en exposant le substrat pendant cinq minutes dans une chambre à plasma d'air),
- un lavage lessiviel,
- un traitement aux ultra-violets (le nettoyage aux UV est par exemple effectué pendant trente minutes),
- un traitement chimique pour graver ou fonctionnaliser la surface (la gravure chimique et la fonctionnalisation sont par exemple effectuées à l'aide d'un bain ultrasonique pendant quinze minutes),
- un pré-revêtement de la surface 6' avec un polymère fonctionnel tel que le copolymère de poly(éthylène-acide coacrylique) couramment appelé PEAA (qui contient 5% en poids de groupes acide acrylique), ou le copolymère poly(éthylène-anhydride maléique) couramment appelé PEMA (qui contient 0,5% en poids de groupes acide maléique).

Pour améliorer l'adhérence du revêtement 7, une autre possibilité est d'ajouter du copolymère PEAA ou PEMA directement dans la solution de polymère. Par exemple, le polyéthylène utilisé est mélangé à un copolymère PEAA dilué à 1% dans une solution de toluène chaud. La solution est par exemple déposée sur un substrat préchauffé, est gélifiée puis chauffée à une température supérieure au point de fusion des polymères dans un four (150°C pour le HDPE) pour permettre au solvant de s'évaporer et, en même temps, au polymère de fondre uniformément sur le substrat 6. Après refroidissement, le substrat 6 est recouvert du revêtement 7.

Cette dernière approche peut être combinée avec les techniques de traitement de surface mentionnées précédemment.

Comme précédemment indiqué, il apparait plus aisé d'utiliser des nanoparticules dispersées dans un liquide plutôt que des nanoparticules en poudre qui risque de s'agréger dans la matrice. Le liquide ici retenu est le xylène.

Le PEHD possède des chaînes longues et linéaires avec très peu de groupes terminaux, qui peuvent contenir des groupes réactifs tels que les acides carboxyliques en raison d'une certaine oxydation du polymère pendant le traitement. Dans ce cas, toute liaison du polymère aux nanoparticules 9 est similaire à une liaison transversale (réticulation - qui accroit le poids moléculaire) et provoque la précipitation de l'ensemble polymère/particules. L'addition de polyéthylène fonctionnel court comme le copolymère PEAA (contenant ici 10% de groupes acide acrylique) et/ou le copolymère PEMA (contenant ici 0,5% de groupes anhydride maléique) a permis de grandement réduire le risque de précipitation et de rendre la dispersion des nanoparticules plus transparente. Le copolymère PEAA ou PEMA joue ainsi le rôle d'un agent de fonctionnalisation. A la solution de xylène contenant les nanoparticules et le copolymère, est ajouté le polyéthylène HDPE pour former la solution qui sera déposée sur le substrat.

Le revêtement 7 à base de polyéthylène a une épaisseur comprise ici entre 10 et 100 µm. Avec une épaisseur de 100 µm, il est possible d'avoir un revêtement 7 présentant une faible absorption, d'environ 7% dans la bande LWIR. La possibilité d'obtenir des épaisseurs relativement importantes, par rapport aux matrices à base de matériau sol-gel, tout en ayant une faible atténuation de la transmission des rayonnements dans la bande d'intérêt est extrêmement intéressante.

La dureté du revêtement 7 selon le deuxième mode de réalisation, mesurée au scléromètre, est par exemple inférieure à 3N.

On remarque que la dispersion des nanoparticules 9 dans la matrice 8 de polymère organique ou dans la matrice 8 sol-gel est abordée différemment. En effet, les matériaux sol-gel tels que GLYMO et GLYDO se présentent sous la forme de petits oligomères à forte concentration de groupes réactifs Si-OH et d'autres fonctions de type époxy, alcools et éthers issus de l'ouverture du cycle époxy ; avec une très grande solubilité dans des solvants polaires (alcools, cétones, esters). Au contraire, le polyéthylène retenu est un polymère très long et très linéaire avec seulement quelques groupes réactifs et une solubilité modérée dans le xylène. Ceci explique pourquoi une dispersion initiale des nanoparticules dans l'eau a été préférée pour l'incorporation des nanoparticules au matériau sol-gel et une dispersion initiale des nanoparticules dans le xylène a été préférée pour l'incorporation des nanoparticules au polyéthylène. En utilisant les procédures indiquées, il est possible d'atteindre 70%, voire 90%, en poids de nanoparticules dans le revêtement sec.

Bien entendu, l'invention n'est pas limitée au mode de réalisation décrit mais englobe toute variante entrant dans le champ de l'invention telle que définie par les revendications.

En particulier, le dispositif de détection et le composant optique peuvent avoir des structures différentes de celles décrites.

Le substrat peut être en un autre matériau que le sulfure de zinc (ZnS) et par exemple en séléniure de zinc (ZnSe) ou en Germanium, en verre, en silicium, en silice, en fluorure de magnésium (MgF₂) ou autre.

Le revêtement peut comprendre une couche anti-réflexion ou d'adaptation d'indice entre les différentes couches qui le composent, et/ou entre le revêtement lui-même et le substrat, et/ou sur la surface externe du revêtement.

La bande d'intérêt peut être une bande plus large, plus étroite ou différente de celle mentionnée. Par exemple, il est possible également d'avoir une très bonne transmittance des rayonnements de longueurs d'onde inférieures à 7µm en raison de l'effet antireflet du matériau sol-gel compte-tenu de l'épaisseur du revêtement et de l'indice de réfraction du matériau sol-gel dans la plage de 1,4-1,5 µm. La transmittance dans les domaines ultraviolet et visible peut également être très bonne compte-tenu de l'apparence du revêtement et des propriétés des matériaux sol-gel et polyéthylène.

La plage d'intérêt peut-être multi-spectrale au sens où elle peut couvrir plusieurs plages de longueurs d'ondes d'intérêt entre l'UV et le LWIR, distinguées soit par les plages de transmissions atmosphériques ou soit par les bandes spectrales de réponse des éléments sensibles.

Les longueurs d'ondes d'intérêt peuvent ainsi être différentes de celles décrites. L'élément sensible peut être un capteur infrarouge NIR ou SWIR (couvrant respectivement les bandes spectrales 0,7-1µm et 0,9-2,6µm), ou un capteur ultra-violet ou un capteur visible (matrice silicium). Les capteurs peuvent être de type CCD ou CMOS...

Le revêtement 7 peut être déposé d'une autre manière que la manière décrite. Le revêtement 7 à base de polyéthylène HDPE peut par exemple être déposé par extrusion.

Le revêtement 7 peut comprendre, ou pas, une couche d'adhésion entre la matrice 8 et la surface 6' du substrat 6.

Les nanoparticules peuvent avoir un taux de transmission voisin ou supérieur au taux de transmission par le substrat des rayonnements de longueurs d'onde comprises dans la bande prédéterminée de longueurs d'onde. Le revêtement dans son ensemble peut avoir un taux de transmission voisin ou supérieur au taux de transmission par le substrat des rayonnements de longueurs d'onde comprises dans la bande prédéterminée de longueurs d'onde. Le revêtement dans son ensemble peut également avoir un taux de transmission inférieur au taux de transmission par le substrat des rayonnements de longueurs d'onde comprises dans la bande prédéterminée de longueurs d'onde si une telle solution contribue par ailleurs à des gains de performances sur d'autres paramètres tels que la tenue à la pluvio-érosion typiquement.

Le dispositif de détection peut avoir toute forme et pas forcément une forme de révolution. Il en est de même pour le composant optique externe.

Les nanoparticules peuvent être en un autre matériau (fluorure de lanthanide), un autre fluorure de terre rare ou chalcogénures, ou en plusieurs matériaux à partir du moment où cet ou ces autres matériaux ont un taux de transmission adapté dans la bande de longueurs d'onde d'intérêt.

Les nanoparticules peuvent avoir d'autres dimensions et formes que celles indiquées (par exemple aplaties, sphériques, pyramidales, lattes, bâtonnets...).

Par taux de transmission au moins voisin du taux prédéterminé de transmission des rayonnements de longueurs d'onde comprises dans la bande prédéterminée de longueurs d'onde, on entend un taux de transmission supérieur ou égal à 80% du taux prédéterminé et de préférence supérieur ou égal à 90%. Le taux de transmission du matériau des nanoparticules peut également être supérieur au taux de transmission du substrat.

## Revendications

1. Composant optique (5) comprenant un substrat (6) en un matériau ayant un taux prédéterminé de transmission de rayonnements ayant une longueur d'onde comprise dans une bande prédéterminée de longueurs d'onde, et un revêtement (7) s'étendant sur une surface (6') du substrat (6), **caractérisé en ce que** le revêtement (7) comprend une matrice (8) à base d'au moins un polymère dans laquelle sont noyées des nanoparticules (9) en au moins un matériau ayant un taux de transmission au moins voisin du taux prédéterminé de transmission des rayonnements de longueurs d'onde comprises dans la bande prédéterminée de longueurs d'onde.

2. Composant selon la revendication 1, dans lequel le polymère est obtenu à partir d'un matériau sol-gel.

3. Composant selon la revendication 2, dans lequel le matériau sol-gel est l'un des suivants :
- méthyl-triéthoxysilane (MTEOS) ;
- 3-glycidyloxypropyltrimethoxysilane (GLYMO) ;
- 3-glycidyloxypropylmethyldimethoxysilane (GLYDO).

4. Composant selon l'une quelconque des revendications 2 et 3, dans lequel le revêtement (7) a une épaisseur supérieure ou égale à 0,3 µm.

5. Composant selon la revendication 4, dans lequel l'épaisseur du revêtement (7) est comprise entre 1 et 1,5 µm.

6. Composant selon la revendication 1, dans lequel le polymère est un polyéthylène ayant une masse volumique supérieure à 0,94 g.cm⁻³ comme un polyéthylène à haute densité (PEHD) ou un polyéthylène à ultra haut poids moléculaire (UHMWPE).

7. Composant selon la revendication 6, dans lequel le polyéthylène est mélangé avec un copolymère de polyéthylène et d'acide acrylique ou un copolymère de polyéthylène et de méthyle acrylate.

8. Composant selon l'une quelconque des revendications 5 et 6, dans lequel le revêtement (7) a une épaisseur comprise entre 10 et 100 µm.

9. Composant selon l'une quelconque des revendications précédentes, dans lequel les nanoparticules (9) sont en fluorure de lanthanide et plus particulièrement d'ytterbium.

10. Composant selon l'une quelconque des revendications précédentes, dans lequel les nanoparticules (9) ont une plus grande dimension comprise entre 20 et 30 nm.

11. Composant selon l'une quelconque des revendications précédentes, dans lequel les nanoparticules (9) ont une forme générale sensiblement ovoïde.

12. Composant selon l'une quelconque des revendications précédentes, dans lequel le revêtement (7) comprend une couche d'adhésion entre la matrice (8) et la surface (6') du substrat (6).

13. Composant selon l'une quelconque des revendications précédentes, dans lequel le substrat (6) est en sulfure de zinc.

14. Composant selon l'une quelconque des revendications précédentes, dans lequel le polymère de la matrice (8), le matériau et la concentration des nanoparticules (9) sont choisis pour que le revêtement (7) provoque une perte de transmission inférieure à 20% dans la bande prédéterminée de longueurs d'onde et de préférence 10%.

15. Composant selon l'une quelconque des revendications précédentes, dans lequel la bande prédéterminée de longueurs d'onde s'étend entre 7 et 14 µm environ.

16. Dispositif de détection comprenant un élément sensible disposé en arrière d'un composant optique selon l'une quelconque des revendications précédentes.

## Revendications modifiées

### Revendications modifiées conformément à la règle 137(2) CBE.

1. Dispositif de détection agencé pour être embarqué sur un véhicule, comprenant un élément sensible à des rayonnements ayant une longueur d'onde comprise dans une bande prédéterminée de longueurs d'onde et disposé en arrière d'un composant optique (5) comprenant un substrat (6) en un matériau ayant un taux prédéterminé de transmission de rayonnements ayant une longueur d'onde comprise dans la bande prédéterminée de longueurs d'onde, et un revêtement (7) qui s'étend sur une surface (6') du substrat (6) et qui est agencé pour protéger le substrat de la pluvio-érosion, **caractérisé en ce que** le revêtement (7) comprend une matrice (8) à base d'au moins un polymère dans laquelle sont noyées des nanoparticules (9), les particules étant en au moins un matériau ayant un taux de transmission au moins voisin du taux prédéterminé de transmission des rayonnements de longueurs d'onde comprises dans la bande prédéterminée de longueurs d'onde, le revêtement ayant une épaisseur déterminée pour qu'il absorbe des chocs de des particules ou des gouttes d'eau en suspension lorsque le véhicule circule à une vitesse et pendant un temps prédéterminés dans un environnement comprenant des particules ou des gouttes d'eau en suspension ; l'épaisseur du revêtement, le polymère de la matrice (8), le matériau et la concentration des nanoparticules (9) étant choisis pour que le revêtement (7) provoque une perte de transmission inférieure à 10% dans la bande prédéterminée de longueurs d'onde.

2. Dispositif selon la revendication 1, dans lequel le polymère est obtenu à partir d'un matériau sol-gel.

3. Dispositif selon la revendication 2, dans lequel le matériau sol-gel est l'un des suivants :
- méthyl-triéthoxysilane (MTEOS) ;
- 3-glycidyloxypropyltrimethoxysilane (GLYMO) ;
- 3-glycidyloxypropylmethyldimethoxysilane (GLYDO).

4. Dispositif selon l'une quelconque des revendications 2 et 3, dans lequel le revêtement (7) a une épaisseur supérieure ou égale à 0,3 µm.

5. Dispositif selon la revendication 4, dans lequel l'épaisseur du revêtement (7) est comprise entre 1 et 1,5 µm.

6. Dispositif selon la revendication 1, dans lequel le polymère est un polyéthylène ayant une masse volumique supérieure à 0,94 g.cm⁻³ comme un polyéthylène à haute densité (PEHD) ou un polyéthylène à ultra haut poids moléculaire (UHMWPE).

7. Dispositif selon la revendication 6, dans lequel le polyéthylène est mélangé avec un copolymère de polyéthylène et d'acide acrylique ou un copolymère de polyéthylène et de méthyle acrylate.

8. Dispositif selon l'une quelconque des revendications 5 et 6, dans lequel le revêtement (7) a une épaisseur comprise entre 10 et 100 µm.

9. Dispositif selon l'une quelconque des revendications précédentes, dans lequel les nanoparticules (9) sont en fluorure de lanthanide et plus particulièrement d'ytterbium.

10. Dispositif selon l'une quelconque des revendications précédentes, dans lequel les nanoparticules (9) ont une plus grande dimension inférieure à la plus petite longueur d'onde d'intérêt de préférence au moins dans un rapport 10, et est de préférence comprise entre 20 et 30 nm.

11. Dispositif selon l'une quelconque des revendications précédentes, dans lequel les nanoparticules (9) ont une forme générale sensiblement ovoïde.

12. Dispositif selon l'une quelconque des revendications précédentes, dans lequel le revêtement (7) comprend une couche d'adhésion entre la matrice (8) et la surface (6') du substrat (6).

13. Dispositif selon l'une quelconque des revendications précédentes, dans lequel le substrat (6) est en sulfure de zinc.

14. Dispositif selon l'une quelconque des revendications précédentes, dans lequel l'épaisseur du revêtement (7) est telle que le revêtement jouer le rôle d'une couche antireflet quart d'onde.

15. Dispositif selon l'une quelconque des revendications précédentes, dans lequel la bande prédéterminée de longueurs d'onde s'étend entre 7 et 14 µm environ.
